(19) Europäisches Patentamt / European Patent Office / Office européen des brevets

(11) **EP 3 683 644 A1**

(12) **EUROPEAN PATENT APPLICATION**
published in accordance with Art. 153(4) EPC

(43) Date of publication:
**22.07.2020 Bulletin 2020/30**

(51) Int Cl.:
***G05D 1/02*** *(2020.01)*

(21) Application number: **19830401.6**

(22) Date of filing: **06.06.2019**

(86) International application number:
**PCT/CN2019/090271**

(87) International publication number:
**WO 2020/007161 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.07.2018 CN 201810724954**

(71) Applicant: **Baidu Online Network Technology (Beijing) Co., Ltd.**
**Beijing 100085 (CN)**

(72) Inventors:
• **PENG, Xiapeng**
**Beijing 100085 (CN)**
• **HUANG, Jiayong**
**Beijing 100085 (CN)**
• **WANG, Ruisuo**
**Beijing 100085 (CN)**

(74) Representative: **Maiwald Patent- und Rechtsanwaltsgesellschaft mbH**
**Elisenhof**
**Elisenstraße 3**
**80335 München (DE)**

(54) **UNMANNED VEHICLE TRAVELING METHOD AND APPARATUS**

(57) Disclosed are an unmanned vehicle traveling method and apparatus. The method comprises: collecting coordinates of a preceding vehicle according to a preset period, and if initial coordinates of the preceding vehicle are detected in the current period, connecting a circular arc between the preceding vehicle and the present vehicle (101); calculating a central angle of the circular arc and a circular arc radius according to the initial coordinates (102); calculating the central angle, the circular arc radius and the predetermined number N of reference trajectory points according to a preset algorithm, and generating N reference trajectory point coordinates of the present vehicle in a vehicle body coordinate system in the current period (103); and generating a reference trajectory line according to the N reference trajectory point coordinates of the present vehicle in the vehicle body coordinate system in the current period, and controlling the present vehicle to travel according to the reference trajectory line (104). Therefore, the traveling trajectory of the present vehicle is planned according to the position of the preceding vehicle, and safe traveling of the present vehicle is guaranteed when no lane line is detected or a camera fails.

collecting a coordinate of a preceding vehicle according to a preset cycle, and in response to detecting an initial coordinate of the preceding vehicle in a current cycle, drawing a circular arc between the preceding vehicle and a present vehicle — 101

determining a central angle of the circular arc and a radius of the circular arc according to the initial coordinate — 102

performing calculation on the central angle, the radius of the circular arc and a predetermined number N of reference trajectory points according to a preset algorithm, and generating coordinates of N reference trajectory points of the present vehicle in a vehicle coordinate system in the current cycle — 103

generating a reference trajectory according to the coordinates of the N reference trajectory points of the present vehicle in the vehicle coordinate system in the current cycle, and controlling the present vehicle to travel according to the reference trajectory — 104

FIG. 1

Printed by Jouve, 75001 PARIS (FR)

**Description**

**CROSS-REFERENCE TO RELATED APPLICATION**

The present disclosure claims priority to and benefits of Chinese Patent Application No. 201810724954.5, titled "UNMANNED VEHICLE TRAVELING METHOD AND APPARATUS", and filed by BAIDU ONLINE NETWORK TECHNOLOGY (BEIJING) CO., LTD. on July 4, 2018.

**FIELD**

The present disclosure relates to the field of traffic safety technologies, and more particularly, to an unmanned vehicle traveling method and an apparatus.

**BACKGROUND**

Integrating technologies such as automatic control, architecture, artificial intelligence, and visual computing, an unmanned vehicle, which is a product of the highly developed computer science, pattern recognition, and intelligent control technologies, and a significant indicator of a country's scientific research strength and industrial level, has broad application prospects in fields of national defense and national economy. Generally, in consideration of the safety of human life, unmanned vehicles have extremely high requirements on safety and reliability, and even require unmanned systems to be able to maintain safe traveling for a period of time in the event of sudden failures of certain conditions.
In the related art, an unmanned vehicle relies on a lane line captured by a camera to travel. However, obviously, when the camera fails or there is no lane line, such a method relying on the lane line detected by the camera may fail to be implemented or even brings danger. For example, during driving on a highway, when there are no lane lines on some road sections, or a lane line cannot be identified as the camera breaks down, given that there is no lane line for the unmanned vehicle's reference, the unmanned vehicle may be driven out of the lane even if changing the lane is not allowed, which is likely to cause a traffic accident.

**SUMMARY**

The present disclosure aims to solve at least one of the technical problems in the related art to some extent.
To this end, a first objective of the present disclosure is to provide an unmanned vehicle traveling method to realize planning a traveling trajectory of a present vehicle according to a position of a preceding vehicle, thereby ensuring safety traveling of the present vehicle when no lane line is detected, or when a camera failure happens.
A second objective of the present disclosure is to provide an unmanned vehicle traveling apparatus.
A third objective of the present disclosure is to provide a computer device.
A fourth objective of the present disclosure is to provide a non-transitory computer-readable storage medium.
A fifth objective of the present disclosure is to provide a computer program product.
To achieve the above objectives, embodiments of a first aspect of the present disclosure provide an unmanned vehicle traveling method, including: collecting a coordinate of a preceding vehicle according to a preset cycle, and in response to detecting an initial coordinate of the preceding vehicle in a current cycle, drawing a circular arc between the preceding vehicle and a present vehicle; determining a central angle of the circular arc and a radius of the circular arc according to the initial coordinate; performing calculation on the central angle, the radius of the circular arc and a predetermined number N of reference trajectory points according to a preset algorithm, and generating coordinates of N reference trajectory points of the present vehicle in a vehicle coordinate system in the current cycle; and generating a reference trajectory according to the coordinates of the N reference trajectory points of the present vehicle in the vehicle coordinate system in the current cycle, and controlling the present vehicle to travel according to the reference trajectory.
To achieve the above objectives, embodiments of a second aspect of the present disclosure provide an unmanned vehicle traveling apparatus, including: a processing module, configured to collect a coordinate of a preceding vehicle according to a preset cycle, and in response to detecting an initial coordinate of the preceding vehicle in a current cycle, to draw a circular arc between the preceding vehicle and a present vehicle; a calculation module, configured to determine a central angle of the circular arc and a radius of the circular arc according to the initial coordinate; a generation module, configured to perform calculation on the central angle, the radius of the circular arc and a predetermined number N of reference trajectory points according to a preset algorithm to generate coordinates of N reference trajectory points of the present vehicle in a vehicle coordinate system in the current cycle; and a control module, configured to generate a reference trajectory according to the coordinates of the N reference trajectory points of the present vehicle in the vehicle coordinate system in the current cycle, and to control the present vehicle to travel according to the reference trajectory.

To achieve the above objectives, embodiments of a third aspect of the present disclosure provide a computer device including a processor and a memory. The processor, by reading executable program codes stored in the memory, executes a program corresponding to the executable program codes to implement the unmanned vehicle traveling method as described in the above embodiments.

To achieve the above objective, embodiments of a fourth aspect of the present disclosure provide a non-transitory computer-readable storage medium. When the computer program is executed by a processor, the unmanned vehicle traveling method as described in the above embodiments is implemented.

To achieve the above objectives, embodiments of a fifth aspect of the present disclosure provide a computer program product. When an instruction in the computer program product is executed by a processor, he unmanned vehicle traveling method as described in the above embodiments is implemented.

The technical solution provided by the present disclosure at least has the following beneficial technical effects.

By planning the traveling trajectory of the present vehicle according to the position of the preceding vehicle, it ensures that the reference traveling trajectory of the present vehicle may still be planned when no lane is detected, or when a camera failure happens, which improves traveling safety of the present vehicle and is significant to promotion of unmanned vehicles.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

The above and/or additional aspects and advantages of the present disclosure will become apparent and more readily appreciated from the following descriptions made with reference to the accompanying drawings.

FIG. 1 is a flowchart of an unmanned vehicle traveling method according to an embodiment of the present disclosure.
FIG. 2 is a schematic diagram of a scene of determining a circular arc between a preceding vehicle and a present vehicle according to an embodiment of the present disclosure.
FIG. 3 is a schematic diagram of an application scenario of an unmanned vehicle traveling method according to an embodiment of the present disclosure.
FIG. 4 is a flowchart of an unmanned vehicle traveling method according to another embodiment of the present disclosure.
FIG. 5 is a flowchart of an unmanned vehicle traveling method according to yet another embodiment of the present disclosure.
FIG. 6 is a flowchart of an unmanned vehicle traveling method according to still yet another embodiment of the present disclosure.
FIG. 7 is a schematic structural diagram of an unmanned vehicle traveling apparatus according to an embodiment of the present disclosure.
FIG. 8 is a schematic structural diagram of an unmanned vehicle traveling apparatus according to another embodiment of the present disclosure.

## DETAILED DESCRIPTION

Embodiments of the present disclosure are described below in detail, examples of the embodiments are shown in accompanying drawings, and reference signs that are the same or similar from beginning to end represent the same or similar components or components that have the same or similar functions. The embodiments described below with reference to the accompanying drawings are exemplary, merely used to explain the present disclosure, and cannot be construed as a limit to the present disclosure.

According to the above analysis in the background, it is known that currently unmanned vehicles rely on lane lines detected by cameras. When a lane line cannot be detected due to reasons such as a failure of a camera or an absence of a lane line, an unmanned vehicle has a relatively severe potential safety hazard.

To solve the above technical problems, the present disclosure proposes an unmanned vehicle traveling method. In this method, position information of a preceding vehicle is fully utilized to plan a traveling trajectory of a present vehicle. Consequently, on the one hand, a restriction that unmanned driving relies on cameras is broken up, and on the other hand, planning the traveling trajectory of the present vehicle through a path that the preceding vehicle has already traveled ensures safety of traveling.

The following describes an unmanned vehicle traveling method and an unmanned vehicle traveling apparatus according to the embodiments of the present disclosure with reference to the accompanying drawings.

It should be noted that, although the unmanned vehicle traveling method according to the embodiments of the present disclosure is to ensure traveling safety in the event of a failure of a camera in a vehicle, etc., the unmanned vehicle traveling method provided by the embodiments of the present disclosure may also be adopted when the camera of the vehicle is not defective, and the use of the unmanned vehicle traveling method provided by the present disclosure may better ensure the traveling safety of the vehicle That is, the method provided by the present disclosure and the traditional unmanned vehicle traveling method may be flexibly switched according to the needs of application scenarios.

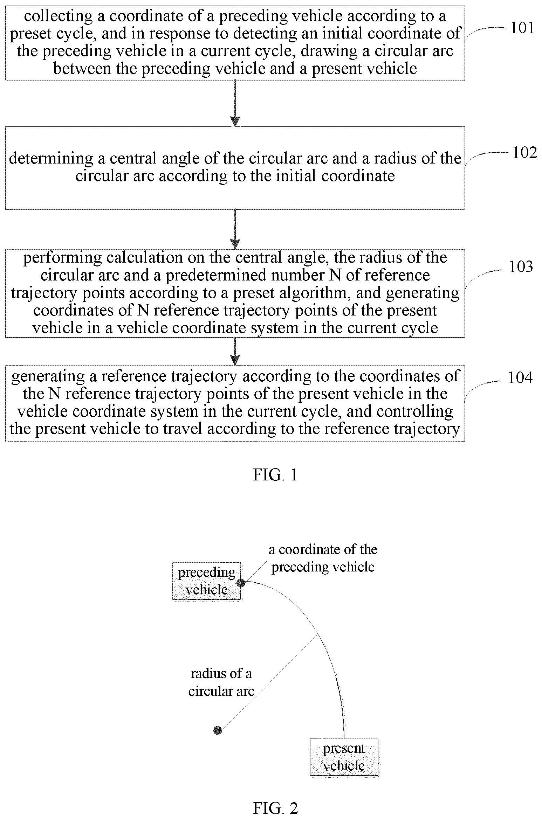

FIG. 1 is a flowchart of an unmanned vehicle traveling method according to an embodiment of the present disclosure. As illustrated in FIG. 1, the method includes the following.

At block 101, a coordinate of a preceding vehicle is collected according to a preset cycle, and in response to detecting an initial coordinate of the preceding vehicle in a current cycle, a circular arc between the preceding vehicle and a present vehicle is drawn.

The preset cycle is related to computing power of relevant processors, a natural motion frequency of a rigid body of the vehicle, a sampling cycle of relevant sensors, and calculation requirements of a reference trajectory according to this implementation. Collecting the coordinate of the preceding vehicle according to the preset cycle may, on the one hand, satisfy the computing power of the relevant processors, and on the other hand, calculate the required reference trajectory. As a possible implementation, the preset cycle may be 0.1S.

In detail, in an embodiment of the present disclosure, the position of the preceding vehicle is used as a planning basis for the traveling trajectory of the present vehicle, and the coordinate of the preceding vehicle is collected according to the preset cycle. If the initial coordinate of the preceding vehicle is detected within the current period, the circular arc between the preceding vehicle and the present vehicle is drawn and used as a traveling trajectory of the present vehicle. To facilitate the traveling of the present vehicle, the coordinate of the preceding vehicle in the embodiment of the present disclosure is a coordinate in a coordinate system of the present vehicle. If the initial coordinate of the preceding vehicle collected is not a coordinate in the coordinate system of the present vehicle, a coordinate system transformation is required to convert the initial coordinate of the preceding vehicle to an initial coordinate of the preceding vehicle in the coordinate system of the present vehicle.

It should be understood that, as described above, the circular arc between the present vehicle and the preceding vehicle is drawn according to the initial coordinate representing a position of the preceding vehicle, and a traveling trajectory corresponding to the circular arc corresponds to an area of a road section that the preceding vehicle has traveled. Consequently, it is safer for the present vehicle to travel according to the traveling trajectory corresponding to the circular arc.

At block 102, a central angle of the circular arc and a radius of the circular arc are determined according to the initial coordinate.

In detail, as illustrated in FIG. 2, a circular arc may be uniquely determined according to the circular arc, the radius and the initial coordinate. To determine a specific trajectory shape of the circular arc so that the present vehicle may travel along the circular arc, the central angle of the circular arc and the radius of the circular arc may be obtained.

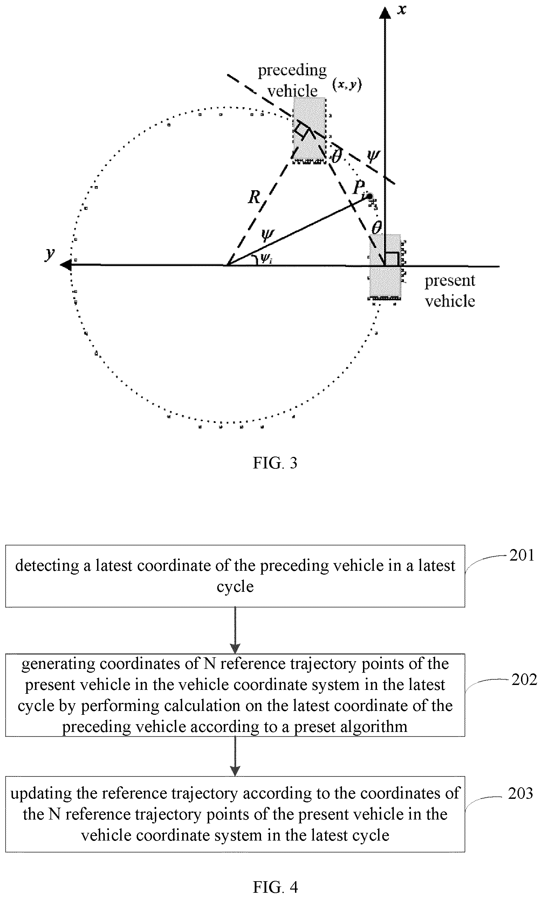

It should be noted that, according to different, the method of obtaining the central angle and the radius of the circular arc varies with application scenarios. As a possible implementation, the central angle $\Psi$ is calculated by a following formula (1), where, referring to FIG. 3, the initial coordinate of the preceding vehicle is (x, y).

$$\Psi = 2 * \theta,$$

$$\text{where } \theta = \arctan(\frac{y}{x}) \qquad \text{Formula (1)}$$

Furthermore, in this example, the radius R of the circular arc is calculated according to formula (2).

$$\sin\_phi = \begin{cases} \sin(\Psi) & |\sin(\Psi)| \geq 1.0e-6 \\ 1.0e-6 & 0.0 \leq \sin(\Psi) \leq 1.0e-6 \\ -1.0e-6 & 0.0 > \sin(\Psi) > -1.0e-6 \end{cases}$$

$$R = \frac{x}{\sin\_phi} \qquad \text{Formula (2)}$$

At block 103, calculation is performed on the central angle, the radius of the circular arc and a predetermined number N of reference trajectory points according to a preset algorithm to generate coordinates of N reference trajectory points of the present vehicle in a vehicle coordinate system in the current cycle.

At block 104, a reference trajectory is generated according to the coordinates of the N reference trajectory points of the present vehicle in the vehicle coordinate system in the current cycle, and the present vehicle is controlled to travel according to the reference trajectory.

It should be understood that the traveling trajectory corresponding to the circular arc is actually composed of a plurality of reference trajectory points. For the present vehicle to be able to travel along the traveling trajectory, coordinates of the plurality of reference trajectory points may be extracted from the circular arc, so that the reference trajectory is determined according to the coordinates of the reference trajectory points, and the present vehicle is controlled to travel according to the reference trajectory.

Obviously, it is not suitable when N is too high or too low. When N is too high, the calculation pressure on the system is great. When N is too low, a traveling route of the present vehicle may deviate from the safety line, leading to a traffic accident. Consequently, the number N of reference trajectory points is determined in advance and may be set according to application requirements. Generally, the number N may ensure that the present vehicle travels along the traveling trajectory that restores the above-mentioned circular arc properly, and thus the safety is guaranteed.

As a possible implementation, N is determined according to time headway $\tau$ between the present vehicle and the preceding vehicle and a path planning cycle. A sampling cycle t0 is determined according to the time headway, and t0 is a collection time period for collecting the position of the preceding vehicle required for generating the reference trajectory. Usually, t0 is set as $t0 \geq 1.2\,\tau$, so as to avoid that the reference trajectory generated cannot cover a current position of the present vehicle because t0 is too small, and to avoid waste of calculation resources because t0 is too great. In some possible embodiments, according to relevant regulations, a vehicle needs to maintain the time headway $\tau$ of at least 1.5s to 2.2s when traveling, so t0 may be set as 3S.

In this embodiment, formula (3) is used to obtain the number N, where T is the path planning cycle which is determined comprehensively based on factors such as computing power of relevant processors, natural motion frequency of the rigid body of the vehicle, and sampling cycle of the sensors, T may be 0.1s, and *floor* indicates rounding down.

$$N = floor(t0 / T) + 1 \qquad \text{Formula (3)}$$

Furthermore, calculating is performed on the central angle, the radius of the circular arc and the predetermined number N of reference trajectory points according to the preset algorithm to generate the coordinates of N reference trajectory points of the present vehicle in the vehicle coordinate system in the current cycle, such that the reference trajectory is generated according to the coordinates of the N reference trajectory points of the present vehicle in the vehicle coordinate system in the current cycle, and the present vehicle is controlled to travel according to the reference trajectory.

It should be noted that, the preset algorithm for generating the coordinates of the N reference trajectory points varies with the application scenarios. As a possible implementation, the coordinates $P_i$ of the N reference trajectory points are calculated according to the following formula (4), where i represents a positive integer from 1 to N, $P_{i.x}$ represents an abscissa value of the ith reference trajectory point, and $P_{i.y}$ represents an ordinate value of the ith reference trajectory point.

$$\psi_i = \frac{\psi(i-1)}{N-1}$$
$$P_{i.}x = R * \sin(\psi_i) \qquad \text{Formula (4)}$$
$$P_{i.}y = R * \left[1 - \cos(\psi_i)\right]$$

It should be understood that, since the present vehicle keeps traveling, the coordinates of the N reference trajectory points in the reference trajectory may be updated according to the change of time to ensure that the reference trajectory of the vehicle is adjusted according to changes of the position of the preceding vehicle, such that the present vehicle follows the preceding vehicle, thereby ensuring driving safety.

In an embodiment of the present disclosure, as illustrated in FIG. 4, after generating the coordinates of the N reference trajectory points of the present vehicle in the vehicle coordinate system in the current cycle at block 103, the method further includes the following.

At block 201, a latest coordinate of the preceding vehicle is detected in a latest cycle.

The latest coordinate of the preceding vehicle reflects the latest traveling position of the preceding vehicle. In order to follow the preceding vehicle to ensure the safety of the present vehicle, the latest coordinate of the preceding vehicle may be detected.

At block 202, coordinates of N reference trajectory points of the present vehicle in the vehicle coordinate system in the latest cycle is generated by performing calculation on the latest coordinate of the preceding vehicle according to a preset algorithm.

At block 203, the reference trajectory is updated according to the coordinates of the N reference trajectory points of the present vehicle in the vehicle coordinate system in the latest cycle.

In detail, when the position of the preceding vehicle changes, the traveling trajectory of the present vehicle also changes adaptively. Therefore, in this example, the latest coordinate of the preceding vehicle is calculated according to the preset algorithm to generate the coordinates of the N reference trajectory points of the present vehicle in the vehicle coordinate system in the latest cycle, and then the reference trajectory is updated according to the coordinates of the N reference trajectory points of the present vehicle in the vehicle coordinate system in the latest cycle.

It should be noted that, in different application scenarios, different preset algorithms are used to generate the coordinates of the N reference trajectory points of the present vehicle in the vehicle coordinate system in the latest cycle. Examples are as follows.

Example 1.

In this example, the coordinates of the preceding vehicle obtained are not coordinates in the coordinate system of the present vehicle, and the coordinate system of the present vehicle changes with the change of the present vehicle. Therefore, to facilitate the traveling of the present vehicle, calculations of relevant reference trajectory points may be performed with changes of the coordinate system of the present vehicle.

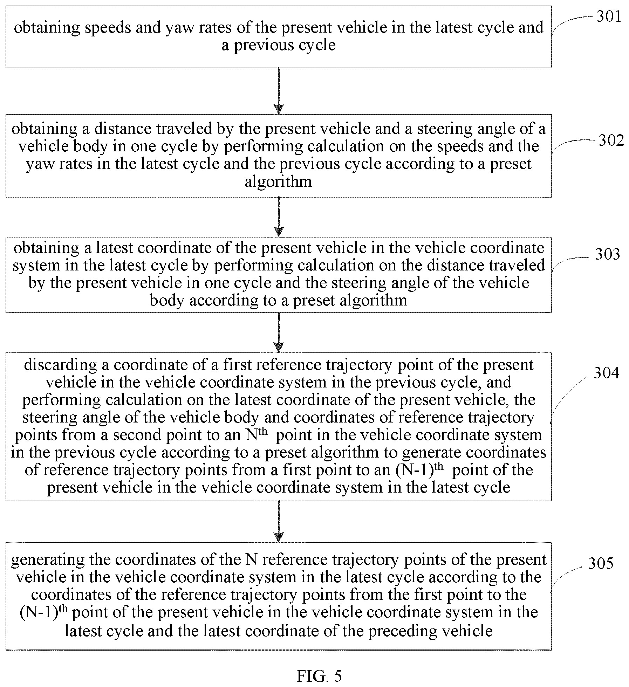

In detail, as illustrated in FIG. 5, the action at block 203 includes the following.

At block 301, speeds and yaw rates of the present vehicle in the latest cycle and a previous cycle are obtained.

It should be understood that the changes in the speed and the yaw rate of the present vehicle are related to the update of the coordinate system of the present vehicle. Therefore, the speeds and the yaw rates of the present vehicle in the latest cycle and the previous cycle are obtained, such that the coordinate system of the present vehicle in the latest cycle may be determined according to changes in the speed and the yaw rate of the present vehicle.

At block 302, a distance traveled by the present vehicle and a steering angle of a vehicle body in one cycle are obtained by performing calculation on the speeds and the yaw rates in the latest cycle and the previous cycle according to the preset algorithm.

It is not difficult to understand that the change of the coordinate system of the present vehicle is reflected in the change of the distance traveled by the present vehicle and the steering angle after the speed and the yaw rate in the previous cycle change. Therefore, calculation is performed on the speeds and the yaw rates in the latest cycle and the previous cycle according to the preset algorithm to obtain the distance traveled by the present vehicle in one cycle and the steering angle of the vehicle body.

It should be noted that the preset algorithm for obtaining the distance traveled by the present vehicle in one cycle and the steering angle of the vehicle body varies with the application scenarios. As a possible implementation, formula (5) is used to calculate and obtain the distance traveled by the vehicle in one cycle and the steering angle of the vehicle body. In formula (5), the distance traveled by the vehicle in one cycle is S, the steering angle of the vehicle body is $\delta\Psi$, the yaw rates of the present vehicle in the latest cycle and the previous cycle are *yaw_rate* and *yaw_rate_last,* respectively, and the speeds of the present vehicle in the latest cycle and the previous cycle are *Vx* and *Vx_last*, respectively.

$$S = \frac{Vx + Vx\_last}{2} * T$$

$$\delta\psi = \frac{yaw\_rate + yaw\_rate\_last}{2} * T$$

$$Vx\_last = Vx$$

$$yaw\_rate\_last = yaw\_rate \qquad \text{Formula (5)}$$

At block 303, calculation is performed on the distance traveled by the present vehicle in one cycle and the steering angle of the vehicle body according to a preset algorithm to obtain a latest coordinate of the present vehicle in the vehicle coordinate system in the latest cycle.

In detail, calculation is performed on the distance traveled by the present vehicle in one cycle and the steering angle of the vehicle body according to the preset algorithm to obtain the latest coordinate of the present vehicle in the vehicle coordinate system in the latest cycle, so that the reference trajectory may be updated according to the latest coordinate of the present vehicle.

It should be noted that, the preset algorithm for obtaining the latest coordinate of the present vehicle in the vehicle coordinate system in the latest cycle varies with application scenarios. As a possible implementation, formulas (7) and (8) are used to calculate the latest coordinate of the present vehicle. In the formulas (7) and (8), the distance traveled by the present vehicle in one cycle is S, the steering angle of the vehicle body is $\delta\Psi$, a clockwise turning radius of the present vehicle is R, an abscissa value of the latest coordinate of the present vehicle is $x\_self$, and an ordinate value of the latest coordinate of the present vehicle is $y\_self$.

$$R = \begin{cases} S\!\big/\!\delta\psi & |\delta\psi| \geq 1.0e-6 \\ S\!\big/\!1.0e-6 & 0.0 \leq \delta\psi < 1.0e-6 \\ S\!\big/\!{-1.0e-6} & 0.0 > \delta\psi > -1.0e-6 \end{cases} \qquad \text{Formula (7)}$$

$$x\_self = R*\sin\left(\delta\psi\right)$$

$$y\_self = R*\left[1 - \cos\left(\delta\psi\right)\right] \qquad \text{Formula (8)}$$

At block 304, a coordinate of a first reference trajectory point of the present vehicle in the vehicle coordinate system in the previous cycle is discarded, and calculation is performed on the latest coordinate of the present vehicle, the steering angle of the vehicle body and coordinates of reference trajectory points from a second point to an $N^{th}$ point in the vehicle coordinate system in the previous cycle according to a preset algorithm to generate coordinates of reference trajectory points from a first point to an $(N-1)^{th}$ point of the present vehicle in the vehicle coordinate system in the latest cycle.

At block 305, the coordinates of the N reference trajectory points of the present vehicle in the vehicle coordinate system in the latest cycle are generated according to the coordinates of the reference trajectory points from the first point to the $(N-1)^{th}$ point of the present vehicle in the vehicle coordinate system in the latest cycle and the latest coordinate of the preceding vehicle.

In detail, it is obvious that, during the traveling of the present vehicle, the first reference trajectory point in the previous cycle is covered with the traveling of the present vehicle. Therefore, the coordinate of the first reference trajectory point of the present vehicle in the vehicle coordinate system in the previous cycle is discarded, and the calculation is performed on the latest coordinate of the present vehicle, the steering angle of the vehicle body and the coordinates of reference trajectory points from the second point to the $N^{th}$ point in the vehicle coordinate system in the previous cycle according to the preset algorithm to generate the coordinates of reference trajectory points from the first point to the $(N-1)^{th}$ point of the present vehicle in the vehicle coordinate system in the latest cycle. In other words, the coordinates of reference trajectory points from the second point to the $N^{th}$ point in the previous cycle are converted from the coordinate system of the present vehicle in the previous cycle to the coordinate system of the present vehicle in the latest cycle.

In different application scenarios, different preset algorithms are used to perform calculation on the latest coordinate of the present vehicle, the steering angle of the vehicle body and the coordinates of reference trajectory points from the second point to the $N^{th}$ point in the vehicle coordinate system in the previous cycle. As a possible embodiment, formula (9) may be used to generate the coordinates of reference trajectory points from the first point to the $(N-1)^{th}$ point of the present vehicle in the vehicle coordinate system in the latest cycle. In formula (9), the coordinate system transformation is performed on the coordinates $P_i(2 \leq i \leq N)$ of reference trajectory points from the second point to the $N^{th}$ point in the previous cycle. The abscissas and ordinates of the reference trajectory points in the latest cycle are represented by $P_i.x$ and $P_i.y$, respectively, the abscissas and ordinates of the reference trajectory points in the previous cycle are represented by $P_i.x-x\_self$ and $P_i.y-y\_self$, respectively, and the steering angle of the vehicle body is $\delta\Psi$.

$$\begin{bmatrix} P_i.x \\ P_i.y \end{bmatrix} = \begin{bmatrix} \cos(\delta\psi) & \sin(\delta\psi) \\ -\sin(\delta\psi) & \cos(\delta\psi) \end{bmatrix} \begin{bmatrix} P_i.x-x\_self \\ P_i.y-y\_self \end{bmatrix} \quad (2 \leq i \leq N)$$

Formula (9)

Furthermore, the coordinates of the N reference trajectory points of the present vehicle in the vehicle coordinate system in the latest cycle are generated according to the coordinates of the reference trajectory points from the first point to the $(N-1)^{th}$ point of the present vehicle in the vehicle coordinate system in the latest cycle and the latest coordinate of the preceding vehicle. As described above, the coordinates of the reference trajectory points from the first point to the $(N-1)^{th}$ point of the present vehicle in the vehicle coordinate system in the latest cycle are obtained by performing calculation on the coordinates of the reference trajectory points from the second point to the $N^{th}$ point collected in the previous cycle. The coordinate of the $N^{th}$ reference trajectory point of the present vehicle in the vehicle coordinate system in the latest cycle is obtained by converting the latest coordinate of the preceding vehicle collected in the current cycle into a coordinate in the vehicle coordinate system of the present vehicle.

As a possible implementation, based on the calculation results of formulas (7) to (9), formula (10) is used to calculate and obtain the coordinates of the N reference trajectory points of the present vehicle in the vehicle coordinate system in the latest cycle.

$$\begin{bmatrix} P_i.x \\ P_i.y \end{bmatrix} = \begin{bmatrix} P_{i+1}.x \\ P_{i+1}.y \end{bmatrix} \quad (1 \leq i \leq N-1)$$
$$\begin{bmatrix} P_N.x \\ P_N.y \end{bmatrix} = \begin{bmatrix} x \\ y \end{bmatrix}$$

Formula (10)

Example 2

In this example, a global navigation satellite system is introduced to measure a position (including longitude *lon* and latitude *lat*) of the present vehicle in a geographic coordinate system in real time. That is, an absolute coordinate and a heading angle of the present vehicle are measured. An inertial measurement unit is introduced to measure the heading angle, which may be understood as an angle $\varphi$ between the present vehicle and the north direction, and in this example, the north direction is defined as positive. In other words, when obtaining the absolute coordinate and the heading angle of the present vehicle, it is unnecessary to update the reference trajectory by converting coordinates of relevant reference trajectory points to adapt to changes in the coordinate system of the present vehicle.

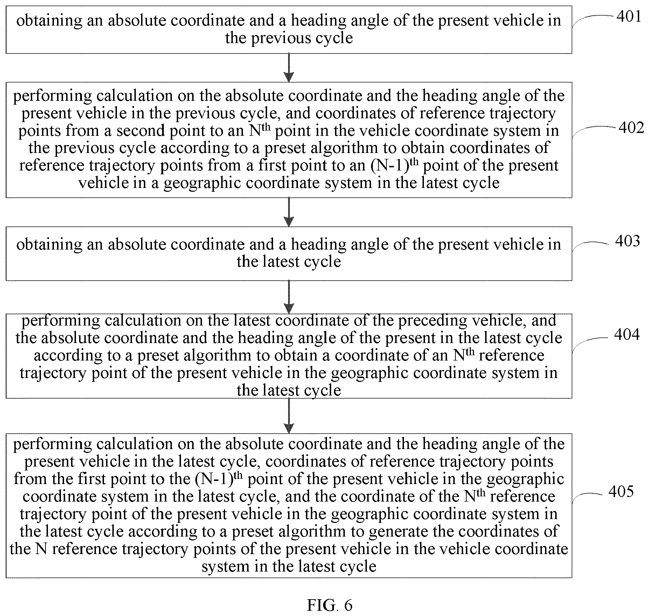

In detail, as illustrated in FIG. 6, the action at block 203 includes the following.

At block 401, an absolute coordinate and a heading angle of the present vehicle in the previous cycle are obtained.

In detail, a global navigation positioning system and an inertial measurement device may be used to measure the absolute coordinate and the heading angle of the present vehicle in the previous cycle. Instead of taking the present vehicle as a reference coordinate system, the absolute coordinate and the heading angle take external environment such as the earth as the reference coordinate system, so that the absolute coordinate and the heading angle do not change with the change of the present vehicle.

At block 402, calculation is performed on the absolute coordinate and the heading angle of the present vehicle in the previous cycle, and the coordinates of reference trajectory points from the second point to the $N^{th}$ point in the vehicle coordinate system in the previous cycle according to a preset algorithm to obtain the coordinates of reference trajectory points from the first point to the $(N-1)^{th}$ point of the present vehicle in the geographic coordinate system in the latest cycle.

In detail, the coordinates of the reference trajectory points from the second point to the $N^{th}$ point in the previous cycle are calculated according to the preset algorithm to be converted into the coordinates of the reference trajectory points from the first point to the $(N-1)^{th}$ point of the present vehicle in the latest cycle. That is, the coordinate of the first reference trajectory point collected in the previous cycle is covered, and the coordinates of the reference trajectory points from the second point to the $N^{th}$ point are updated as the coordinates of the reference trajectory points from the first point to the $(N-1)^{th}$ point in the latest cycle. In this embodiment, for the convenience of calculation, the absolute coordinate is used to represent a reference trajectory coordinate. An abscissa of the absolute coordinate is a longitude value, and an ordinate of the absolute coordinate is a latitude value.

It should be noted that, in different application scenarios, different preset algorithms are used to obtain the coordinates of the reference trajectory points from the first point to the $(N-1)^{th}$ point of the present vehicle in the geographic coordinate system in the latest cycle. As a possible implementation, formula (11) is used for calculation, where in formula (11), the abscissas and ordinates of the reference trajectory points are represented by $P_i.^{lon}$ and $P_i.^{lat}$, respectively.

$$\begin{bmatrix} P_i.^{lon} \\ P_i.^{lat} \end{bmatrix} = \begin{bmatrix} P_{i+1}.^{lon} \\ P_{i+1}.^{lat} \end{bmatrix} \quad (1 \le i \le N-1) \qquad \text{Formula (11)}$$

At block 403, an absolute coordinate and a heading angle of the present vehicle in the latest cycle are obtained.

Similarly, the global navigation positioning system and the inertial measurement device may be used to measure the absolute coordinate and the heading angle of the present vehicle in the latest cycle.

At block 404, calculation is performed on the latest coordinate of the preceding vehicle, and the absolute coordinate and the heading angle of the present in the latest cycle according to the preset algorithm to obtain a coordinate of an $N^{th}$ reference trajectory point of the present vehicle in the geographic coordinate system in the latest cycle.

As a possible implementation, formula (12) is used to calculate the coordinate of the $N^{th}$ reference trajectory point of the present vehicle in the geographic coordinate system in the latest cycle. An abscissa value and an ordinate value of the latest coordinate of the preceding vehicle in the vehicle coordinate system of the present vehicle are represented by x and y, respectively, and an abscissa value and an ordinate value of the latest coordinate of the present vehicle in the vehicle coordinate system of the present vehicle in the latest cycle are represented by X and Y, respectively.

$$\begin{bmatrix} X \\ Y \end{bmatrix} = \begin{bmatrix} \cos(\varphi) & -\sin(\varphi) \\ \sin(\varphi) & \cos(\varphi) \end{bmatrix} \begin{bmatrix} x \\ y \end{bmatrix}$$

$$\begin{bmatrix} P_N.^{lon} \\ P_N.^{lat} \end{bmatrix} = \begin{bmatrix} lon \\ lat \end{bmatrix} + \begin{bmatrix} Y / [Re*\cos(lat)] \\ X / Re \end{bmatrix} \qquad \text{Formula (12)}$$

At block 405, calculation is performed on the absolute coordinate and the heading angle of the present vehicle in the latest cycle, the coordinates of the reference trajectory points from the first point to the $(N-1)^{th}$ point of the present vehicle in the geographic coordinate system in the latest cycle, and the coordinate of the $N^{th}$ reference trajectory point of the present vehicle in the geographic coordinate system in the latest cycle according to a preset algorithm to generate the coordinates of the N reference trajectory points of the present vehicle in the vehicle coordinate system in the latest cycle.

In detail, after obtaining the coordinates of the reference trajectory points from the first point to the $N^{th}$ point of the present vehicle in the latest cycle, the reference trajectory is updated according to the first to the $N^{th}$ reference trajectory points. That is, calculation is performed on the absolute coordinate and the heading angle of the present vehicle in the latest cycle, the coordinates of the reference trajectory points from the first point to the $(N-1)^{th}$ point of the present vehicle in the geographic coordinate system in the latest cycle, and the coordinate of the $N^{th}$ reference trajectory point of the present vehicle in the geographic coordinate system in the latest cycle according to the preset algorithm to generate the coordinates of the N reference trajectory points of the present vehicle in the vehicle coordinate system in the latest cycle, so as to update the reference trajectory according to the coordinates of the N reference trajectory points.

Since in actual applications, the present vehicle usually travels in the coordinate system of the present vehicle, the coordinates $P_i(lon, lat)$ of the reference trajectory points from the first point to the $N^{th}$ point in the absolute coordinate system in the latest cycle generated in the above steps need to be transformed into the coordinates $P_i(x, y)$ of the N reference trajectory points in the coordinate system of the present vehicle.

As a possible implementation, formula (13) is used to perform the calculation on the coordinate of the $N^{th}$ reference trajectory point of the present vehicle in the geographic coordinate system in the latest cycle to generate the coordinates of the N reference trajectory points of the present vehicle in the vehicle coordinate system in the latest cycle.

$$\begin{bmatrix} P_{i.}x \\ P_{i.}y \end{bmatrix} = \begin{bmatrix} \cos(\varphi) & \sin(\varphi) \\ -\sin(\varphi) & \cos(\varphi) \end{bmatrix} \begin{bmatrix} (P_{i.}lat - lat)*\text{Re} \\ (P_{i.}lon - lon)*\text{Re}*\cos(lat) \end{bmatrix} \qquad \text{Formula (13)}$$

In summary, with the unmanned vehicle traveling method according to the embodiments of the present disclosure, the traveling trajectory of the present vehicle is planned according to the position of the preceding vehicle, so that it is ensured that the reference traveling trajectory of the present vehicle may still be planned when no lane is detected or when a failure happens on the camera, which improves traveling safety of the present vehicle and is significant to promotion of unmanned vehicles.

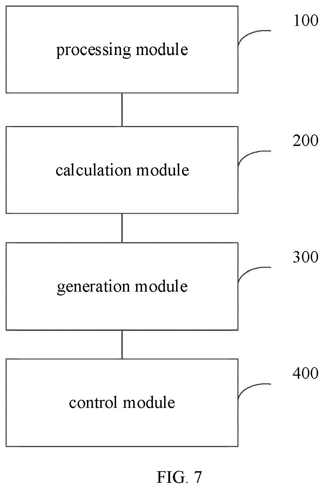

To implement the above embodiments, the present disclosure further provides an unmanned vehicle traveling apparatus. FIG. 7 is a schematic structural diagram of an unmanned vehicle traveling apparatus according to an embodiment of the present disclosure. As illustrated in FIG. 7, the apparatus includes: a processing module 100, a calculation module 200, a generation module 300 and a control module 400.

The processing module 200 is configured to collect a coordinate of a preceding vehicle according to a preset cycle, and in response to detecting an initial coordinate of the preceding vehicle in a current cycle, to draw a circular arc between the preceding vehicle and a present vehicle.

The calculation module 200 is configured to determine a central angle of the circular arc and a radius of the circular arc according to the initial coordinate.

The generation module 300 is configured to perform calculation on the central angle, the radius of the circular arc and a predetermined number N of reference trajectory points according to a preset algorithm to generate coordinates of N reference trajectory points of the present vehicle in a vehicle coordinate system in the current cycle.

The control module 400 is configured to generate a reference trajectory according to the coordinates of the N reference trajectory points of the present vehicle in the vehicle coordinate system in the current cycle, and to control the present vehicle to travel according to the reference trajectory.

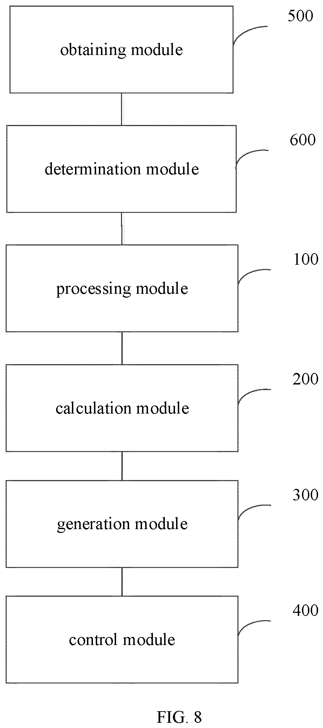

In an embodiment of the present disclosure, as illustrated in FIG. 8, and on the basis of FIG. 7, the apparatus further includes an obtaining module 500 and a determination module 600.

The obtaining module 500 is configured to obtain time headway between the present vehicle and the preceding vehicle and a path planning cycle.

The determination module 600 is configured to determine the number N of reference trajectory points by performing calculation on the time headway and the path planning cycle according to a preset algorithm.

It should be noted that the foregoing explanation of the embodiments of the unmanned vehicle traveling method is also applicable to the unmanned vehicle traveling apparatus according to this embodiment, and the implementation principles thereof are similar, and will not be repeated here.

In summary, with the unmanned vehicle traveling apparatus according to the embodiments of the present disclosure, the traveling trajectory of the present vehicle is planned according to the position of the preceding vehicle, so that it is ensured that the reference traveling trajectory of the present vehicle may still be planned when no lane is detected, or when a camera failure happens, which improves traveling safety of the present vehicle and is significant to promotion unmanned vehicles.

To implement the above embodiments, the present disclosure further provides a computer device including a processor. The processor, by reading executable program codes stored in a memory, executes a program corresponding to the executable program codes to implement the unmanned vehicle traveling method as described in the above embodiments.

To implement the above embodiments, the present disclosure further provides a non-transitory computer-readable storage medium. When an instruction in the storage medium is executed by a processor, the unmanned vehicle traveling method as described in the above embodiments is implemented.

To implement the above embodiments, the present disclosure further provides a computer program product. When an instruction in the computer program product is executed by a processor, the unmanned vehicle traveling method as described in the above embodiments is implemented.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance or significance. Thus, the feature defined with "first" and "second" may comprise one or more this feature. In the description of the present disclosure, "a plurality of" means at least two, for example, two or three, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. An unmanned vehicle traveling method, comprising:

collecting a coordinate of a preceding vehicle according to a preset cycle, and in response to detecting an initial coordinate of the preceding vehicle in a current cycle, drawing a circular arc between the preceding vehicle and a present vehicle;

determining a central angle of the circular arc and a radius of the circular arc according to the initial coordinate;

performing calculation on the central angle, the radius of the circular arc and a predetermined number N of reference trajectory points according to a preset algorithm, and generating coordinates of N reference trajectory points of the present vehicle in a vehicle coordinate system in the current cycle; and

generating a reference trajectory according to the coordinates of the N reference trajectory points of the present vehicle in the vehicle coordinate system in the current cycle, and controlling the present vehicle to travel according to the reference trajectory.

2.  The method according to claim 1, further comprising:

obtaining time headway between the present vehicle and the preceding vehicle and a path planning cycle; and

determining the number N of reference trajectory points by performing calculation on the time headway and the path planning cycle according to a preset algorithm.

3.  The method according to claim 1 or 2, after generating the coordinates of the N reference trajectory points of the present vehicle in the vehicle coordinate system in the current cycle, further comprising:

detecting a latest coordinate of the preceding vehicle in a latest cycle;

generating coordinates of N reference trajectory points of the present vehicle in the vehicle coordinate system in the latest cycle by performing calculation on the latest coordinate of the preceding vehicle according to a preset algorithm; and

updating the reference trajectory according to the coordinates of the N reference trajectory points of the present vehicle in the vehicle coordinate system in the latest cycle.

4.  The method according to claim 3, wherein generating the coordinates of the N reference trajectory points of the present vehicle in the vehicle coordinate system in the latest cycle by performing calculation on the latest coordinates of the preceding vehicle according to the preset algorithm comprises:

obtaining speeds and yaw rates of the present vehicle in the latest cycle and a previous cycle;

obtaining a distance traveled by the present vehicle and a steering angle of a vehicle body in one cycle by performing calculation on the speeds and the yaw rates in the latest cycle and the previous cycle according to a preset algorithm;

obtaining a latest coordinate of the present vehicle in the vehicle coordinate system in the latest cycle by performing calculation on the distance traveled by the present vehicle in one cycle and the steering angle of the vehicle body according to a preset algorithm;

discarding a coordinate of a first reference trajectory point of the present vehicle in the vehicle coordinate system in the previous cycle, and performing calculation on the latest coordinate of the present vehicle, the steering angle of the vehicle body and coordinates of reference trajectory points from a second point to an $N^{th}$ point in the vehicle coordinate system in the previous cycle according to a preset algorithm to generate coordinates of reference trajectory points from a first point to an $(N-1)^{th}$ point of the present vehicle in the vehicle coordinate system in the latest cycle; and

generating the coordinates of the N reference trajectory points of the present vehicle in the vehicle coordinate system in the latest cycle according to the coordinates of the reference trajectory points from the first point to the $(N-1)^{th}$ point of the present vehicle in the vehicle coordinate system in the latest cycle and the latest coordinate of the preceding vehicle.

5.  The method according to claim 3, wherein generating the coordinates of N reference trajectory points of the present vehicle in the vehicle coordinate system in the latest cycle by performing calculation on the latest coordinates of the preceding vehicle according to the preset algorithm comprises:

obtaining an absolute coordinate and a heading angle of the present vehicle in the previous cycle;

performing calculation on the absolute coordinate and the heading angle of the present vehicle in the previous cycle, and coordinates of reference trajectory points from a second point to an $N^{th}$ point in the vehicle coordinate system in the previous cycle according to a preset algorithm to obtain coordinates of reference trajectory points from a first point to an $(N-1)^{th}$ point of the present vehicle in a geographic coordinate system in the latest cycle;

obtaining an absolute coordinate and a heading angle of the present vehicle in the latest cycle;

performing calculation on the latest coordinate of the preceding vehicle, and the absolute coordinate and the heading angle of the present in the latest cycle according to a preset algorithm to obtain a coordinate of an $N^{th}$ reference trajectory point of the present vehicle in the geographic coordinate system in the latest cycle; and performing calculation on the absolute coordinate and the heading angle of the present vehicle in the latest cycle, coordinates of reference trajectory points from the first point to the $(N-1)^{th}$ point of the present vehicle in the geographic coordinate system in the latest cycle, and the coordinate of the $N^{th}$ reference trajectory point of the present vehicle in the geographic coordinate system in the latest cycle according to a preset algorithm to generate the coordinates of the N reference trajectory points of the present vehicle in the vehicle coordinate system in the latest cycle.

6. An unmanned vehicle traveling apparatus, comprising:

a processing module, configured to collect a coordinate of a preceding vehicle according to a preset cycle, and in response to detecting an initial coordinate of the preceding vehicle in a current cycle, to draw a circular arc between the preceding vehicle and a present vehicle;
a calculation module, configured to determine a central angle of the circular arc and a radius of the circular arc according to the initial coordinate;
a generation module, configured to perform calculation on the central angle, the radius of the circular arc and a predetermined number N of reference trajectory points according to a preset algorithm to generate coordinates of N reference trajectory points of the present vehicle in a vehicle coordinate system in the current cycle; and
a control module, configured to generate a reference trajectory according to the coordinates of the N reference trajectory points of the present vehicle in the vehicle coordinate system in the current cycle, and to control the present vehicle to travel according to the reference trajectory.

7. The apparatus according to claim 6, further comprising:

an obtaining module, configured to obtain time headway between the present vehicle and the preceding vehicle and a path planning cycle; and
a determination module, configured to determine the number N of reference trajectory points by performing calculation on the time headway and the path planning cycle according to a preset algorithm.

8. The apparatus according to claim 6 or 7, further comprising:

a detection module, configured to detect a latest coordinate of the preceding vehicle in a latest cycle;
a generation module, configured to generate coordinates of N reference trajectory points of the present vehicle in the vehicle coordinate system in the latest cycle by performing calculation on the latest coordinate of the preceding vehicle according to a preset algorithm; and
an update module, configured to update the reference trajectory according to the coordinates of the N reference trajectory points of the present vehicle in the vehicle coordinate system in the latest cycle.

9. The apparatus according to claim 8, wherein the generation module is configured to:

obtain speeds and yaw rates of the present vehicle in the latest cycle and a previous cycle;
obtain a distance traveled by the present vehicle and a steering angle of a vehicle body in one cycle by performing calculation on the speeds and the yaw rates in the latest cycle and the previous cycle according to a preset algorithm;
obtain a latest coordinate of the present vehicle in the vehicle coordinate system in the latest cycle by performing calculation on the distance traveled by the present vehicle in one cycle and the steering angle of the vehicle body according to a preset algorithm;
discard a coordinate of a first reference trajectory point of the present vehicle in the vehicle coordinate system in the previous cycle, and performing calculation on the latest coordinates of the present vehicle, the steering angle of the vehicle body and coordinates of reference trajectory points from a second point to an $N^{th}$ point in the vehicle coordinate system in the previous cycle according to a preset algorithm to generate coordinates of reference trajectory points from a first point to an $(N-1)^{th}$ point of the present vehicle in the vehicle coordinate system in the latest cycle; and
generate the coordinates of the N reference trajectory points of the present vehicle in the vehicle coordinate system in the latest cycle according to the coordinates of the reference trajectory points from the first point to the $(N-1)^{th}$ point of the present vehicle in the vehicle coordinate system in the latest cycle and the latest coordinate of the preceding vehicle.

**10.** The apparatus according to claim 8, wherein the generation module is configured to:

obtain an absolute coordinate and a heading angle of the present vehicle in the previous cycle;

perform calculation on the absolute coordinate and the heading angle of the present vehicle in the previous cycle, and coordinates of reference trajectory points from a second point to an $N^{th}$ point in the vehicle coordinate system in the previous cycle according to a preset algorithm to obtain coordinates of reference trajectory points from a first point to an $(N-1)^{th}$ point of the present vehicle in a geographic coordinate system in the latest cycle;

obtain an absolute coordinate and a heading angle of the present vehicle in the latest cycle;

perform calculation on the latest coordinate of the preceding vehicle, and the absolute coordinate and the heading angle of the present in the latest cycle according to a preset algorithm to obtain a coordinate of an $N^{th}$ reference trajectory point of the present vehicle in the geographic coordinate system in the latest cycle; and

perform calculation on the absolute coordinate and the heading angle of the present vehicle in the latest cycle, coordinates of reference trajectory points from the first point to the $(N-1)^{th}$ point of the present vehicle in the geographic coordinate system in the latest cycle, and the coordinate of the $N^{th}$ reference trajectory point of the present vehicle in the geographic coordinate system in the latest cycle according to a preset algorithm to generate the coordinates of the N reference trajectory points of the present vehicle in the vehicle coordinate system in the latest cycle.

**11.** A computer device, comprising a memory, a processor and a computer program stored on the memory and executable by the processor, wherein when the processor executes the program, the processor is configured to implement the unmanned vehicle traveling method according to any one of claims 1 to 5.

**12.** A non-transitory computer-readable storage medium having a computer program stored thereon, wherein when the computer program is executed by a processor, the unmanned vehicle traveling method according to any one of claims 1 to 5 is implemented.

**13.** A computer program product, wherein when an instruction in the computer program product is executed by a processor, the unmanned vehicle traveling method according to any one of claims 1 to 5 is implemented.

collecting a coordinate of a preceding vehicle according to a preset cycle, and in response to detecting an initial coordinate of the preceding vehicle in a current cycle, drawing a circular arc between the preceding vehicle and a present vehicle ⌐ 101

determining a central angle of the circular arc and a radius of the circular arc according to the initial coordinate ⌐ 102

performing calculation on the central angle, the radius of the circular arc and a predetermined number N of reference trajectory points according to a preset algorithm, and generating coordinates of N reference trajectory points of the present vehicle in a vehicle coordinate system in the current cycle ⌐ 103

generating a reference trajectory according to the coordinates of the N reference trajectory points of the present vehicle in the vehicle coordinate system in the current cycle, and controlling the present vehicle to travel according to the reference trajectory ⌐ 104

FIG. 1

a coordinate of the preceding vehicle

preceding vehicle

radius of a circular arc

present vehicle

FIG. 2

FIG. 3

| | |
|---|---|
| detecting a latest coordinate of the preceding vehicle in a latest cycle | 201 |

| | |
|---|---|
| generating coordinates of N reference trajectory points of the present vehicle in the vehicle coordinate system in the latest cycle by performing calculation on the latest coordinate of the preceding vehicle according to a preset algorithm | 202 |

| | |
|---|---|
| updating the reference trajectory according to the coordinates of the N reference trajectory points of the present vehicle in the vehicle coordinate system in the latest cycle | 203 |

FIG. 4

obtaining speeds and yaw rates of the present vehicle in the latest cycle and a previous cycle ⌐ 301

obtaining a distance traveled by the present vehicle and a steering angle of a vehicle body in one cycle by performing calculation on the speeds and the yaw rates in the latest cycle and the previous cycle according to a preset algorithm ⌐ 302

obtaining a latest coordinate of the present vehicle in the vehicle coordinate system in the latest cycle by performing calculation on the distance traveled by the present vehicle in one cycle and the steering angle of the vehicle body according to a preset algorithm ⌐ 303

discarding a coordinate of a first reference trajectory point of the present vehicle in the vehicle coordinate system in the previous cycle, and performing calculation on the latest coordinate of the present vehicle, the steering angle of the vehicle body and coordinates of reference trajectory points from a second point to an $N^{th}$ point in the vehicle coordinate system in the previous cycle according to a preset algorithm to generate coordinates of reference trajectory points from a first point to an $(N-1)^{th}$ point of the present vehicle in the vehicle coordinate system in the latest cycle ⌐ 304

generating the coordinates of the N reference trajectory points of the present vehicle in the vehicle coordinate system in the latest cycle according to the coordinates of the reference trajectory points from the first point to the $(N-1)^{th}$ point of the present vehicle in the vehicle coordinate system in the latest cycle and the latest coordinate of the preceding vehicle ⌐ 305

FIG. 5

obtaining an absolute coordinate and a heading angle of the present vehicle in the previous cycle ⌐~401

performing calculation on the absolute coordinate and the heading angle of the present vehicle in the previous cycle, and coordinates of reference trajectory points from a second point to an $N^{th}$ point in the vehicle coordinate system in the previous cycle according to a preset algorithm to obtain coordinates of reference trajectory points from a first point to an $(N-1)^{th}$ point of the present vehicle in a geographic coordinate system in the latest cycle ⌐~402

obtaining an absolute coordinate and a heading angle of the present vehicle in the latest cycle ⌐~ 403

performing calculation on the latest coordinate of the preceding vehicle, and the absolute coordinate and the heading angle of the present in the latest cycle according to a preset algorithm to obtain a coordinate of an $N^{th}$ reference trajectory point of the present vehicle in the geographic coordinate system in the latest cycle ⌐~ 404

performing calculation on the absolute coordinate and the heading angle of the present vehicle in the latest cycle, coordinates of reference trajectory points from the first point to the $(N-1)^{th}$ point of the present vehicle in the geographic coordinate system in the latest cycle, and the coordinate of the $N^{th}$ reference trajectory point of the present vehicle in the geographic coordinate system in the latest cycle according to a preset algorithm to generate the coordinates of the N reference trajectory points of the present vehicle in the vehicle coordinate system in the latest cycle ⌐~ 405

FIG. 6

```
┌─────────────────────────────┐
│                             │   ⟋ 100
│      processing module      │
│                             │
└──────────────┬──────────────┘
               │
┌──────────────┴──────────────┐
│                             │   ⟋ 200
│      calculation module     │
│                             │
└──────────────┬──────────────┘
               │
┌──────────────┴──────────────┐
│                             │   ⟋ 300
│      generation module      │
│                             │
└──────────────┬──────────────┘
               │
┌──────────────┴──────────────┐
│                             │   ⟋ 400
│       control module        │
│                             │
└─────────────────────────────┘
```

FIG. 7

obtaining module — 500

determination module — 600

processing module — 100

calculation module — 200

generation module — 300

control module — 400

FIG. 8

### INTERNATIONAL SEARCH REPORT

| International application No. |
| --- |
| **PCT/CN2019/090271** |

**A. CLASSIFICATION OF SUBJECT MATTER**

G05D 1/02(2006.01)i

According to International Patent Classification (IPC) or to both national classification and IPC

**B. FIELDS SEARCHED**

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNPAT, CNKI, WPI, EPODOC: 百度, 圆心角, 自动驾驶, 圆弧, 前车, 坐标, 弧, 参考, 轨迹, 路线, 速度, 速率, 转向, 转弯, central, angle, auto, vehicle, coordinat+, arc, path, routh

**C. DOCUMENTS CONSIDERED TO BE RELEVANT**

| Category* | Citation of document, with indication, where appropriate, of the relevant passages | Relevant to claim No. |
| --- | --- | --- |
| PX | CN 108919802 A (BAIDU ONLINE NETWORK TECHNOLOGY (BEIJING) CO., LTD.) 30 November 2018 (2018-11-30)<br>entire document | 1-13 |
| A | CN 104303123 A (TRIMBLE NAVIGATION, LTD.) 21 January 2015 (2015-01-21)<br>description, pages 2-4, and figures 1-18B | 1-13 |
| A | CN 107499378 A (UNIVERSITY OF SHANGHAI FOR SCIENCE AND TECHNOLOGY) 22 December 2017 (2017-12-22)<br>entire document | 1-13 |
| A | CN 107618502 A (NIO CO., LTD.) 23 January 2018 (2018-01-23)<br>entire document | 1-13 |
| A | CN 104210489 A (WUHAN UNIVERSITY OF TECHNOLOGY) 17 December 2014 (2014-12-17)<br>entire document | 1-13 |
| A | US 7010398 B2 (THE BOEING COMPANY) 07 March 2006 (2006-03-07)<br>entire document | 1-13 |

☐ Further documents are listed in the continuation of Box C.   ☑ See patent family annex.

| | |
| --- | --- |
| \*    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **07 August 2019** | **28 August 2019** |

| Name and mailing address of the ISA/CN | Authorized officer |
| --- | --- |
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

# EP 3 683 644 A1

**INTERNATIONAL SEARCH REPORT**
Information on patent family members

International application No.

**PCT/CN2019/090271**

| Patent document cited in search report | | | Publication date (day/month/year) | Patent family member(s) | | | Publication date (day/month/year) |
|---|---|---|---|---|---|---|---|
| CN | 108919802 | A | 30 November 2018 | None | | | |
| CN | 104303123 | A | 21 January 2015 | EP | 2847643 | B1 | 10 July 2019 |
| | | | | CN | 104303123 | B | 03 April 2018 |
| | | | | US | 9020757 | B2 | 28 April 2015 |
| | | | | EP | 2847643 | A1 | 18 March 2015 |
| | | | | US | 9417632 | B2 | 16 August 2016 |
| | | | | US | 2013304300 | A1 | 14 November 2013 |
| | | | | WO | 2013169919 | A1 | 14 November 2013 |
| | | | | US | 2015198953 | A1 | 16 July 2015 |
| CN | 107499378 | A | 22 December 2017 | CN | 107499378 | B | 24 May 2019 |
| CN | 107618502 | A | 23 January 2018 | WO | 2019037619 | A1 | 28 February 2019 |
| CN | 104210489 | A | 17 December 2014 | CN | 104210489 | B | 13 June 2017 |
| US | 7010398 | B2 | 07 March 2006 | US | 2003222887 | A1 | 04 December 2003 |

Form PCT/ISA/210 (patent family annex) (January 2015)

22

**EP 3 683 644 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201810724954